# DEMANDE DE BREVET EUROPEEN

(11) **EP 1 507 185 A1**
(43) Date de publication de la demande: **16.02.2005**
(21) Numéro de dépôt: 03292017.5
(22) Date de dépôt: 11.08.2003
(51) Int. Cl.: G06F 1/00

(54) **Méthode et dispositif de protection contre l'accès non-autorisé à une routine sensible**

(71) Demandeur: Axalto S.A., 92120 Montrouge (FR)
(72) Inventeur: Torno, Daniel, 92120 Montrouge (FR); Ferreira, Isildo, 92120 Montrouge (FR)
(74) Mandataire: Cassagne, Philippe M.J.

(57) **Abrégé**

Méthode de protection contre l'accès non-autorisé à une routine sensible en terme de sécurité par une instruction exécutée par un microprocesseur et appelant ladite routine, ladite routine sensible permettant d'accéder à des données confidentielles, caractérisée en ce que lors de l'appel à la routine sensible la méthode comporte les étapes suivantes :
- une étape de contrôle de l'adresse de l'instruction appelant la routine sensible,
- une étape de contrôle du point d'entrée de l'instruction dans la routine sensible,
- une étape de génération d'une interruption lorsque l'instruction appelant la routine sensible se trouve à une adresse non-autorisé ou lorsque le point d'entrée n'est pas un point d'entrée autorisé.

## Description

### Domaine de l'invention

La présente invention concerne le contrôle des appels de routines et des sauts lors de l'exécution d'instructions par un microprocesseur (CPU), en particulier lors des appels de routines par les instructions de sauts de type JUMP conditionnels ou non, CALL et RET. L'invention concerne plus particulièrement une méthode et un dispositif de protection contre l'accès non-autorisé à une routine sensible en terme de sécurité par une instruction exécutée par un microprocesseur, ladite instruction appelant ladite routine sensible, ladite routine sensible permettant d'accéder à des données confidentielles.

L'invention trouve une application particulière pour les CPU exécutant des applications logicielles nécessitant soit une sécurisation de l'exécution vis à vis d'attaques frauduleuses ou vis à vis de défaillances logicielles, soit une fiabilisation contre des perturbations externes (cas des CPU utilisés dans le domaine des transports ou de l'avionique).

### Arrière-plan de l'invention

Lors de l'exécution d'un ensemble d'instruction par un microprocesseur, le compteur de programme PC de ce CPU est positionné sur l'instruction qui va être exécutée et dans le cas d'instructions JUMP ou CALL il est dérouté vers l'adresse d'une autre routine.
Certaines routines donnent accès à des données confidentielles, par exemple un code d'identification personnel (PIN) permettant d'authentifier un utilisateur d'un service tel qu'un service de transaction bancaire ou l'accès à un réseau de télécommunication. Potentiellement ces routines peuvent être appelées de n'importe quelle partie de la mémoire et un accès à la routine est possible après le contrôle des privilèges d'accès effectué au début de la routine.

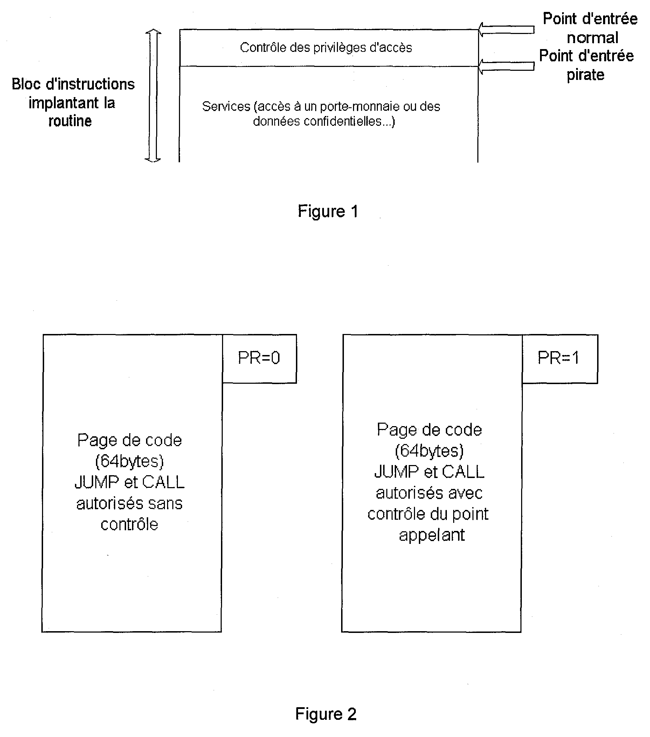

La figure 1 illustre ces mécanismes connus d'accès à la routine et à des données confidentielles.
Un fraudeur qui arriverait à perturber le déroulement des instructions pourrait provoquer un saut du compteur de programme PC dans la routine accédant à des données confidentielles. De telles perturbations sont par exemple une attaque "hardware" telle que l'attaque de type "microprobing" (technique d'attaque par pose de microsondes directement sur le silicium après enlèvement des couches supérieures du circuit, permettant soit d'espionner des signaux, soit de perturber le fonctionnement par injection de signaux parasites), des attaques visant à perturber le fonctionnement du CPU comme des "glitch" de tension (créneau de tension positive ou négative très court de l'ordre de la micro-seconde appliqué sur les entrées/sorties ou l'alimentation du CPU perturbant le fonctionnement du CPU s'il n'est pas filtré par des détecteurs de tension) ou l'attaque par pulse laser, ou des attaques logicielles par modification de la valeur de la pile du CPU.
Pour éviter ce type d'accès frauduleux, il est connu de l'homme du métier des solutions de type "hardware" et logiciel. Dans le domaine "hardware", il est connu de munir le microprocesseur de boucliers (en anglais shield) contre le microprobing ou des détecteurs de tension (glitch), ou une matrice de contrôle d'accès (par exemple de type MACL commercialisée par la société ST Microelectronics) qui définit les zones exécutables ou de code par page (impossibilité de faire un saut JUMP sur une zone déclarée en donnée mais aucun contrôle sur un saut JUMP en zone code). Dans le domaine logiciel, il est connu de procéder à des contrôles d'intégrité de pile.

### Résumé de l'invention

Un objet de la présente invention est de proposer une méthode et un dispositif alternatif contre l'accès non-autorisé à une routine sensible en terme de sécurité par une instruction exécutée par un microprocesseur qui soit plus efficace et/ou facile à mettre en oeuvre dans les microprocesseurs existants.
L'invention consiste à implanter un contrôle de l'adresse de l'instruction appelante (JUMP ou CALL ) au point d'entrée de routines sensibles. De manière plus précise, il faut réaliser deux contrôles pour remplir complètement un objectif de contrôle des droits :
- d'une part un contrôle du point d'entrée des routines exécutables, c'est à dire vérifier que les points d'entrée sont définis par le programmeur lors du codage et que tout saut à un point non défini est interdit,
- d'autre part un contrôle de l'origine de l'appel, c'est à dire vérifier que seuls les appels venant de points autorisés sont exécutés, ces points d'appel sont soit définis explicitement par le programmeur lors du codage soit générés automatiquement par les outils après le lien (par simplification lorsque des routines de bas niveau sont appelées de multiples points).

Avantageusement, ces deux contrôles sont implantés de manière hardware dans le CPU et gérés par des instructions spécifiques et un compilateur adapté. Il est également possible que ces deux contrôles soient exécutés par un programme d'ordinateur chargé dans le microprocesseur.
En cas de tentative de saut en un point non autorisé du code ou en cas d'appel frauduleux d'une routine protégée, une interruption non masquable est générée et un traitement approprié peut être exécuté (mutisme, effacement des données sensibles...).

### Brève description des dessins

D'autres caractéristiques et avantages de l'invention apparaîtront dans la description suivante détaillée, non limitative, de divers modes de réalisation, en référence aux dessins annexés parmi lesquels :
- la figure 1 illustre l'appel d'une routine exécutable,
- la figure 2 illustre les droits associés aux pages de code,
- la figure 3 illustre un chaînage d'instruction FROM @,
- la figure 4 illustre un exemple d'appel de routines avec contrôle de l'appelant,
- la figure 5 représente l'architecture d'un microprocesseur,
- la figure 6 illustre la logique de contrôle des sauts dans un microprocesseur.

### Description détaillée

Le contrôle du point d'appel est réalisé dans l'idéal en définissant pour chaque instruction si un saut est possible sur celle-ci. Néanmoins, pour des raisons pratiques on peut définir des droits associés à des pages d'une taille de par exemple 64 bytes (identique à la granularité de la page gérée par la matrice de contrôle d'accès MACL cité précédemment). Les droits associés à chaque page sont exprimés sur 1 bits PR (PR pour Page Rights).
Ce bit PR est calculé par le compilateur/linker en fonction d'une directive de compilation (JMP_CONTROL) spécifiée par le programmeur lors du codage des routines. Cette directive de compilation est placée en début de fichier et est valable pour l'ensemble des routines de ce fichier.

La figure 2 illustre le principe des droits associés aux pages de code par l'intermédiaire du bit PR.
La directive de compilation JMP_CONTROL peut être définie à NO. Dans ce cas, les sauts JUMP et CALL sont autorisés sans contrôle (fonctionnement des microprocesseurs classiques), le bit PR des pages de code correspondants à ce fichier est positionné à 0.
La directive de compilation JMP_CONTROL peut être définie à YES. Dans ce cas, les sauts JUMP et CALL avec contrôle de l'appelant, le bit PR des pages de code correspondants à ce fichier est positionné à 1.

Les instructions contenues dans une page ne formant pas forcément un modulo de la page (dans l'exemple 64 bytes), le compilateur devra alors compléter avec des instructions sans action de type NOP dans le cas de fichiers placés consécutivement en mémoire mais avec des options différentes.

Le contrôle du point appelant est fait par une nouvelle instruction dite FROM qui est exécutée par le CPU. Le principe de fonctionnement repose sur 3 types d'instructions FROM qui sont nécessaires dans les pages de type PR=1 :
- FROM ALL : un appel à ce point est possible de n'importe quel autre endroit du code, cette instruction est insérée par le programmeur au début des routines pouvant être appelées.
- FROM @ : un appel à ce point est possible seulement de l'adresse @. Le point appelant est identifié dans le code par le programmeur sous forme d'un label @.
- FROM PREC : cette instruction a 2 fonctions :
   1°) elle est mise en début de page de 64 bytes, un saut à ce point est seulement possible de l'adresse immédiatement précédente située dans la page de code précédente, cette instruction sert à lier les pages de type PR=1 entre elles pour les cas de routines implantées sur plusieurs pages, elle est directement générée par le compilateur/linker.
   2°) elle est mise juste avant les labels de branchement pour autoriser une exécution linéaire des instructions (sans arrivée de branchement), dans ce cas aussi elle est directement générée par le compilateur/linker.

Les types de saut possibles sont les sauts de programme non conditionnel, conditionnel et les instructions de saut spécifiant le point de retour.
Les sauts de programme non conditionnel sont les instructions JMP et CALL.
Les instructions de saut conditionnel (JZ, JNZ, JC...) sont aussi des instructions de saut soumises au contrôle du point appelant c'est à dire de l'adresse d'implantation de l'instruction.
L'instruction RET est aussi une instruction de saut : le point de retour d'une routine est contrôlé par une instruction FROM lorsque la routine appelante est dans une page de type PR=1.

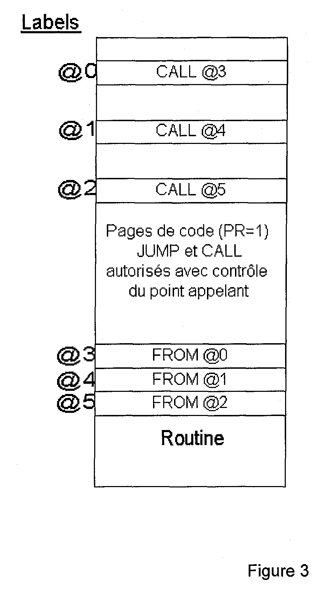

La figure 3 illustre la possibilité de chaînage des instructions FROM @. Dans cet exemple des appels multiples et contrôlés à la même routine sont effectués par des instructions CALL se trouvant aux adresses @0, @1 et @2 respectivement, lesquelles font appel à la routine par l'intermédiaire des points entrants @3, @4 et @5 respectivement. L'autorisation d'accès à la routine est contrôlée par des instructions FROM aux adresses @3, @4 et @5 respectivement, lesquelles vérifient que les instructions CALL se trouve bien aux adresses @0, @1 et @2.

L'algorithme de gestion de l'instruction FROM @ vérifie si le résultat du contrôle exécuté pour une instruction FROM @ est correct, à savoir si :
- d'une part, l'adresse de l'instruction précédemment exécutée est celle contenue dans l'instruction FROM @ considérée,
- ou d'autre part, si l'instruction précédemment exécutée était une instruction FROM @ avec un résultat de contrôle correct ou une instruction FROM PREC dans le cas ou il n'y a pas de saut.

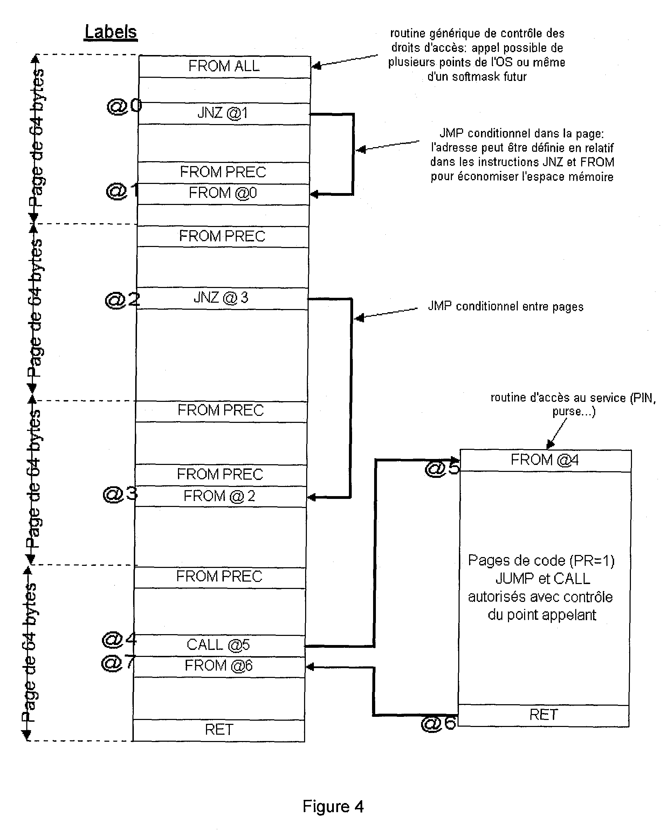

Un exemple d'appels de routines est présenté en relation avec la figure 4.
Il y a un seul point d'entrée possible pour la routine de contrôle des droits. L'appel de la routine d'accès aux instructions ou données sensibles (PIN, porte monnaie électronique ...) ne peut se faire que par la routine de contrôle d'accès et après son exécution jusqu'au point d'appel prévu.

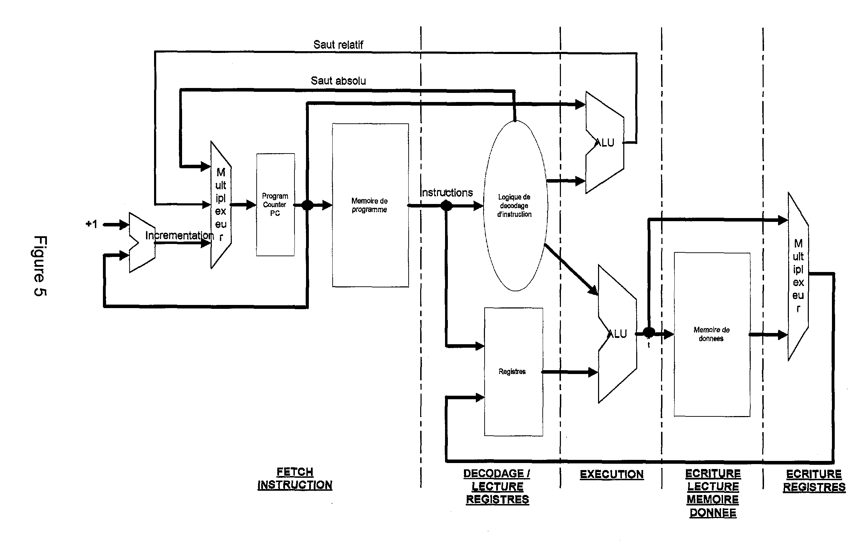

La figure 5 montre l'architecture connu d'un microprocesseur actuel implanté sur 5 cycles :
- 1^{er} cycle : "fetch" instruction consistant à rechercher la prochaine instruction exécutable dans le microprocesseur (calcul de l'adresse de l'instruction et lecture de l'instruction),
- 2^{nd} cycle : décodage des instructions et lecture des registres,
- 3^{eme} cycle : exécution, par exemple addition des opérande,
- 4^{eme} cycle : écriture et lecture en mémoire des données,
- 5^{eme} cycle : écriture des registres.

L'adresse de l'instruction à exécuter est sélectionnée parmi 3 possibilités :
- la nouvelle adresse est une incrémentation de l'adresse précédente (instructions successives),
- la nouvelle adresse est directement extraite de l'instruction précédente ou des registres sans calcul : c'est le cas des sauts absolus (instructions JMP, CALL, RET),
- la nouvelle adresse est calculée par addition de l'adresse actuelle avec une donnée extraite de l'instruction : c'est le cas des sauts relatifs (instructions BRA).

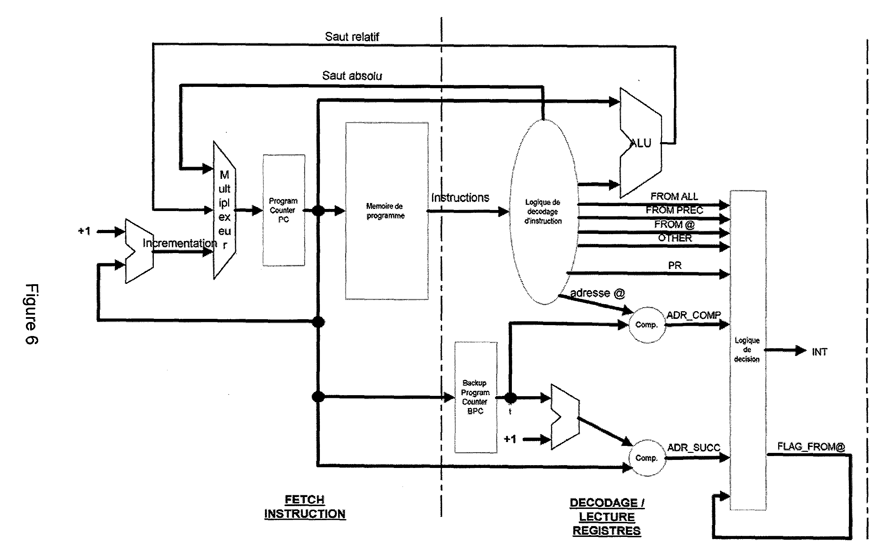

La figure 6 montre l'architecture d'un microprocesseur muni du mécanisme de contrôle des sauts selon l'invention. Elle détaille l'implantation du mécanisme de contrôle des sauts qui est principalement lié aux cycles de recherche ("fetch" instruction) d'adresse et de décodage d'instructions.
De l'instruction lue, les signaux suivants sont extraits :
- FROM ALL : =1 si instruction FROM ALL est décodée.
- FROM PREC : =1 si instruction FROM PREC est décodée.
- FROM @ : =1 si instruction FROM @ est décodée, l'adresse @ est aussi contenue dans l'instruction.
- OTHER : =1 si instruction est différente des 3 instructions précédente.
- le bit PR. On rappelle que PR spécifie le type de page à laquelle appartient l'instruction lue, en particulier PR =1 si la page est à accès contrôlé.
- l'adresse @ spécifiant l'adresse du point d'appel autorisé.
Un registre de backup de l'adresse de l'instruction est utilisé : Backup Program Counter (BPC). Ce registre contient l'adresse de l'instruction exécutée juste avant l'instruction courante.

Les signaux suivants sont calculés :
- ADR_COMP lequel correspond au résultat de la comparaison de l'adresse @ et de l'adresse de l'instruction précédemment exécutée. ADR_COMP est égal à 1 si il y a égalité des adresses c'est à dire si avant d'exécuter l'instruction FROM @, l'instruction précédente était à l'adresse @ qui est le point d'appel autorisé par FROM @.
- ADR_SUCC lequel correspond au résultat de la comparaison de l'adresse courante avec le BPC incrémenté de 1. Dans le cas où ADR_SUCC est égal à 1, il y a eu incrémentation des adresses d'instructions : il s'agit d'instructions successives. De manière alternative, il n'est pas nécessaire de refaire le calcul BPC incrémenté de 1 et de comparer avec le PC actuel car une mémorisation de la commande du multiplexeur de saut donne le même résultat. Si l'incrémentation a été sélectionnée, cela signifie que les adresses sont consécutives.

Les signaux suivants sont générés par le bloc « logique de décision » :
- INT correspond à une interruption non masquable générée en cas de saut non autorisé. Dans le cas où INT est égal à 1, l'exécution normale du programme est stoppée.
- FLAG_FROM@ correspond à un signal utilisé pour le chaînage des instructions FROM@ et FROM PREC, c'est l'implantation de l'algorithme décrit précédemment. FLAG_FROM@ est égal à 1 si l'instruction courante est une instruction FROM@ avec contrôle d'appelant positif, ou si l'instruction courante est une instruction FROM@ et que le signal FLAG_FROM@ est déjà positionné à 1 ce qui veut dire qu'une instruction précédente était une instruction FROM@ avec un contrôle positif (chaînage), ou si l'instruction courante est une instruction FROM PREC.
Les signaux INT et FLAG_FROM@ sont générés par le bloc « logique de décision » conformément au tableau 1 ci-dessous (lequel précise la logique de décision).

**Tableau 1**

| **Type d'instruction** | **PR = 0** **Pas de contrôle** | **PR = 1** **Contrôle de l'appelant** |
|---|---|---|
| **FROM ALL** | INT = 1 (①) | INT = 0 (③) |
| **FROM @** | INT = 1 (①) | Si FLAG_FROM@ ==1 Ou si ADR_COMP == 1 Alors : INT = 0, FLAG_FROM@ =1 Sinon : INT = 1, FLAG_FROM@ =0 (④) |
| **FROM PREC** | INT = 1 (①) | Si ADR_SUCC == 1 Alors : INT = 0, FLAG_FROM@ =1 Sinon : INT = 1, FLAG_FROM@ =0 (⑤) |
| **OTHER** **(Autres instructions)** | INT = 0 (②) | Si ADR_SUCC == 1 Alors : INT = 0 Sinon : INT = 1 (⑥) |

| | | |
|---|---|---|
| (①) : les instructions FROM ALL et FROM@ ne sont pas nécessaires dans ce type de page et ne sont donc pas acceptées par le compilateur. Les instructions FROM PREC ne sont pas générées dans ce type de page. Ces cas étant anormaux, une interruption est générée. | | |
| (②) : fonctionnement d'un microprocesseur classique. | | |
| (③) : point d'entrée commun dans une page à accès contrôlé. | | |
| (④) : l'instruction FROM @ est acceptée (INT=0, pas d'interruption générée): - si l'instruction précédente était une instruction FROM @ contrôlée avec succès (FLAG_FROM@==1 ), - ou si l'adresse de l'instruction précédente est égale à l'adresse @ contenue dans l'instruction FROM @, le résultat de cette comparaison positionne ADR_COMP à 1, et le flag FLAG_FROM est positionné à 1. Le signal FLAG_FROM@ est positionné à 0 pour tous les autres cas ①,②,③,⑤,⑥. | | |
| (⑤) : les instructions FROM PREC sont générées automatiquement par le compilateur pour lier les pages de type PR=1 entre elles et pour autoriser une exécution linéaire à un label de branchement. Une interruption est générée si l'instruction précédemment exécutée n'était pas à l'adresse immédiatement précédente (c'est à dire si ADR_SUCC !=1). Le flag FLAG_FROM est positionné pour autoriser l'enchaînement avec une ou des instructions FROM@. | | |
| (⑥) : enchaînement contrôlé d'instruction : une interruption est générée si l'instruction précédemment exécutée n'était pas à l'adresse immédiatement précédente (c'est à dire si ADR_SUCC !=1). | | |

Avec la méthode selon l'invention, tous les appels de routines sensibles peuvent être contrôlés de façon à éviter des utilisations de donnée ou de service non prévues, accidentelles ou malveillantes.
La méthode selon l'invention donne également au programmeur la possibilité d'une meilleure formalisation de ses routines par la définition de tous les points d'appel et de tous les points appelants de ces routines sensibles.

## Revendications

1. Méthode de protection contre l'accès non-autorisé à une routine sensible en terme de sécurité par une instruction exécutée par un microprocesseur et appelant ladite routine, ladite routine sensible permettant d'accéder à des données confidentielles, **caractérisée en ce que** lors de l'appel à la routine sensible la méthode comporte les étapes suivantes :
- une étape de contrôle de l'adresse de l'instruction appelant la routine sensible,
- une étape de contrôle du point d'entrée de l'instruction dans la routine sensible,
- une étape de génération d'une interruption lorsque l'instruction appelant la routine sensible se trouve à une adresse non-autorisé ou lorsque le point d'entrée n'est pas un point d'entrée autorisé.

2. Méthode de protection contre l'accès non-autorisé à une routine sensible selon la revendication 1, dans laquelle la génération de l'interruption est suivi d'une étape d'effacement des données confidentielles.

3. Méthode de protection contre l'accès non-autorisé à une routine sensible selon la revendication 1, dans laquelle l'étape de contrôle de l'adresse de l'instruction appelant la routine sensible consiste à comparer l'adresse de l'instruction à une liste comportant les adresses de l'ensemble des instructions appelantes autorisées.

4. Méthode de protection contre l'accès non-autorisé à une routine sensible selon la revendication 1, dans laquelle l'étape de contrôle du point d'entrée de l'instruction dans la routine sensible consiste à comparer le point d'entrée de l'instruction à une liste comportant les points d'entrée autorisés de l'ensemble des routines exécutables.

5. Méthode de protection contre l'accès non-autorisé à une routine sensible selon la revendication 1, dans laquelle l'étape de contrôle du point d'entrée de l'instruction dans la routine sensible consiste à vérifier les droits associés à l'instruction appelant la routine sensible.

6. Dispositif de protection contre l'accès non-autorisé à une routine sensible en terme de sécurité par une instruction exécutée par un microprocesseur et appelant ladite routine, ladite routine sensible permettant d'accéder à des données confidentielles, **caractérisé en ce qu'**il comporte :
- des moyens de contrôle de l'adresse de l'instruction appelant la routine sensible,
- des moyens de contrôle du point d'entrée de l'instruction dans la routine sensible,
- des moyens de génération d'une interruption lorsque l'instruction appelant la routine sensible se trouve à une adresse non-autorisé ou lorsque le point d'entrée n'est pas un point d'entrée autorisé.

7. Dispositif de protection contre l'accès non-autorisé à une routine sensible selon la revendication 6, dans lequel une liste des points d'entrée de l'ensemble des routines exécutables est stockée dans une mémoire.

8. Dispositif de protection contre l'accès non-autorisé à une routine sensible selon l'une des revendications 6 ou 7, dans lequel le dispositif est intégré dans le microprocesseur.

9. Objet portable, en particulier de type carte à microprocesseur, **caractérisé ne ce qu'**il comporte un dispositif de protection contre l'accès non-autorisé à une routine sensible selon l'une des revendications 6 à 8.

10. Produit programme d'ordinateur chargeable directement dans la mémoire interne d'un microprocesseur, comprenant des portions de code de logiciel pour l'exécution des étapes de la méthode selon la revendication 1 lorsque ledit programme est exécuté par le microprocesseur.
